(19) Europäisches Patentamt
European Patent Office
Office européen des brevets

(11) EP 2 189 483 A1

(12) EUROPEAN PATENT APPLICATION
published in accordance with Art. 153(4) EPC

(43) Date of publication:
26.05.2010 Bulletin 2010/21

(21) Application number: 08831181.6

(22) Date of filing: 12.09.2008

(51) Int Cl.:
*C08F 297/08* (2006.01) *C08F 4/6592* (2006.01)

(86) International application number:
PCT/JP2008/066553

(87) International publication number:
WO 2009/035086 (19.03.2009 Gazette 2009/12)

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 14.09.2007 JP 2007239163

(71) Applicant: Sumitomo Chemical Company, Limited
Tokyo 104-8260 (JP)

(72) Inventors:
- SENDA, Taichi
Takatsuki-shi
Osaka 569-1124 (JP)
- HANAOKA, Hidenori
Suita-shi
Osaka 565-0874 (JP)

(74) Representative: Vossius & Partner
Siebertstraße 4
81675 München (DE)

# (54) OLEFIN/(METH)ACRYLATE BLOCK COPOLYMER AND METHOD FOR PRODUCING THE SAME

(57) An olefin/(meth)acrylate block copolymer in which a polyolefin segment obtained by polymerization of an olefin is covalently-bonded to a poly(meth)acrylate segment obtained by polymerization of a (meth)acrylate compound, and
a morphology has a micro phase-separation structure.

EP 2 189 483 A1

## Description

### Technical Field

The present invention relates to an olefin/(meth)acrylate block copolymer and a method for producing the same.

### Background Art

A block copolymer of an olefin and a polar monomer is a particularly desired material in polyolefin chemistry. The olefin/polar monomer block copolymer is known as a hydrophilic material excellent in adhesiveness, stainability and water adsorption ability. Recent reports have been made on an attempt to copolymerize a non-polar monomer as represented by an olefin and a polar monomer as represented by (meth)acrylate.
Block copolymerization of an $\alpha$-olefin such as 1-hexene and 1-pentene with methyl methacrylate using an organic lanthanoid complex is reported (see, for example, Non-Patent Documents 1 and 2). The poly(1-hexene)/poly (methyl methacrylate) block copolymers obtained in these literatures are checked for morphology compared to a mixture of homopolymers by a transmission electron microscope (hereinafter, simply referred to as TEM). However, clear micro phase-separation structures are not observed.
On the other hand, a group-IV transition metal complex which has a ligand formed by crosslinking of cyclopentadiene and phenol with a group-XIV element of the periodic table is known as a catalyst for olefin polymerization (see, for example, Patent Document 1). Furthermore, there are reports on block copolymerization of ethylene and methyl methacrylate (see, for example, Non-Patent Document 3) and block copolymerization of propylene and methyl methacrylate (see, for example, Non-Patent Document 4) using a group-IV transition metal complex as a polymerization catalyst component. However, no morphological observation of the block copolymers produced was made.

Patent Document 1: JP 9-87313 A
Non-Patent Document 1: Macromolecules 2000, 33, 7679
Non-Patent Document 2: Polymer International 2004, 53, 1017
Non-Patent Document 3: Macromol. Rapid. Commun. 2001, 22, 1147
Non-Patent Document 4: Macromol. Chem. Phys. 2002, 203, 2329

### Disclosure of the Invention

In the circumstances, the present invention is intended to provide a novel olefin/(meth)acrylate block copolymer and a method for producing the same.
The present inventors have conducted intensive studies with a view to solving the aforementioned problem. As a result, they found that a novel olefin/(meth)acrylate block copolymer morphologically having a micro phase-separation structure and a method for producing the same and arrived at the present invention.
More specifically, according to the present invention, there is provided an olefin/(meth)acrylate block copolymer in which a polyolefin segment obtained by polymerization of an olefin is covalently-bonded to a poly(meth)acrylate segment obtained by polymerization of a (meth)acrylate compound, and a morphology has a micro phase-separation structure.
In the olefin/(meth)acrylate block copolymer of the present invention, it is preferred that the olefin has 2 to 20 carbon atoms and more preferred that the olefin is 1-hexene.
Furthermore, in the olefin/(meth)acrylate block copolymer of the present invention, it is preferred that the (meth) acrylate compound is methyl methacrylate.
It is preferred that the olefin/(meth)acrylate block copolymer comprises not more than 27 mol% of an olefin monomer and not less than 73 mol% of a (meth)acrylate compound monomer.
Furthermore, it is preferred that a molecular weight of the olefin/(meth)acrylate block copolymer of the present invention satisfies the following formulas:

$$Mn \geq 22{,}000 \text{ and } 1.5 > Mw/Mn > 1.1$$

wherein Mn represents a number average molecular weight in terms of polystyrene, Mw represents a weight average molecular weight in terms of polystyrene and Mw/Mn represents molecular weight distribution.
According to the present invention, there is further provided a method for producing an olefin/(meth)acrylate block copolymer by polymerizing an olefin and a (meth)acrylate using a polymerization catalyst obtained by bringing a

transition metal complex represented by formula (1):

[Chemical Formula 1]

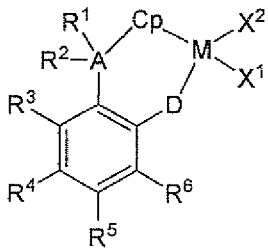

(1)

[in formula (1), M represents a group-IV element of the periodic table, A represents a group-XIV element of the periodic table, D represents a group-XVI element of the periodic table, Cp represents a group having a cyclopentadienyl type anion skeleton, $R^1$, $R^2$, $R^3$, $R^4$, $R^5$ and $R^6$ are the same or different and represent a hydrogen atom, a halogen atom, an alkyl group having 1 to 20 carbon atoms, an aryl group having 6 to 20 carbon atoms, an aralkyl group having 7 to 20 carbon atoms, a silyl group substituted with a hydrocarbon group having 1 to 20 carbon atoms, an alkoxy group having 1 to 20 carbon atoms, an aryloxy group having 6 to 20 carbon atoms, an aralkyloxy group having 7 to 20 carbon atoms or an amino group substituted with a hydrocarbon group having 1 to 20 carbon atoms, the alkyl group, aryl group, aralkyl group, alkoxy group, aryloxy group, aralkyloxy group and hydrocarbon group in $R^1$, $R^2$, $R^3$, $R^4$, $R^5$ and $R^6$ may respectively be substituted with a halogen atom, $R^1$ and $R^2$ may join to form a ring, $R^3$ and $R^4$, $R^4$ and $R^5$, and $R^5$ and $R^6$ each optionally join to form a ring, $X^1$ and $X^2$ represent an alkyl group having 1 to 20 carbon atoms, an aryl group having 6 to 20 carbon atoms and an aralkyl group having 7 to 20 carbon atoms, the alkyl group, aryl group and aralkyl group in $X^1$ and $X^2$ may respectively be each substituted with a halogen atom],
into contact with at least one boron compound selected from the group consisting of the compounds represented by formulas (B1), (2) and (B3):

$BQ^1Q^2Q^3$ (B1)

$G^+(BQ^1Q^2Q^3Q^4)^-$ (B2)

$(L^1\text{-}H)^+(BQ^1Q^2Q^3Q^4)^-$ (B3)

[in formulas (B1), (2) and (B3), B represents a boron atom having a trivalent atomic value, $Q^1$, $Q^2$, $Q^3$ and $Q^4$ each independently represent a halogen atom, a hydrocarbon group, a halogenated hydrocarbon group, a substituted silyl group, an alkoxy group or a disubstituted amino group, $G^+$ represents an inorganic or organic cation and $L^1$ represents a neutral Lewis base].

In the production method of the present invention, it is preferred to have the steps of polymerizing an olefin and then polymerizing a (meth)acrylate compound.

Furthermore, in the production method of the present invention, it is preferred to further provide a step of removing an olefin homopolymer or a (meth)acrylate homopolymer by solvent fractionation.

According to the present invention, there is further provided an olefin/(meth)acrylate block copolymer produced by the aforementioned production method.

### Effect of the Invention

The olefin/(meth)acrylate block copolymer obtained by the present invention has good affinity for not only a polyolefin having no polar group but also various polar substances including metals, and useful as, for example, a compatibilizing agent and an adhesive agent.

## Brief Description of the Drawings

Figure 1 is a TEM photograph (× 50,000) of poly(1-hexene)/poly(methyl methacrylate) block copolymer (17/83) obtained in Example 4;

Figure 2 is a TEM photograph (× 5,000) of poly(1-hexene)/poly(methyl methacrylate) block copolymer (33/67) obtained in Example 6;

Figure 3 is a STEM photograph (× 50,000) of poly(1 hexene)/poly(methyl methacrylate) block copolymer (17/83) obtained in Example 9; and

Figure 4 is a STEM photograph (× 30,000) of poly(1-hexene)/poly(methyl methacrylate) block copolymer (17/83) obtained in Example 10.

## Best Modes for Carrying Out the Invention

The present invention will be more specifically described below. In the specification "(meth)acryl" refers to "acryl" and the corresponding to "methacryl".

[Olefin/(meth)acrylate block copolymer]

The olefin/(meth)acrylate block copolymer of the present invention represents a copolymer comprising a polymer chain, which is formed by covalently bonding a segment of a polymerized olefin (hereinafter, simply referred to as a polyolefin segment) and a segment of polymerized (meth)acrylate compound (hereinafter, simply referred to as a poly (meth)acrylate segment).

Such a copolymer contains a hydrophobic polyolefin segment and a poly(meth)acrylate segment having a polar functional group and thus, the copolymer can be used as a compatibilizing agent of a nonpolar material and a polar material.

Furthermore, the olefin/(meth)acrylate block copolymer of the present invention can serve a surface modifier for hydrophobic material polyolefin to render the surface of polyolefin to be hydrophilic and improve adhesiveness with a polar material.

Furthermore, the olefin/(meth)acrylate block copolymer of the present invention can be also used as a modifier for a filler such as calcium carbonate, titanium oxide and magnesium hydroxide.

The olefin/(meth)acrylate block copolymer can be used as a film, a fiber, a foamed sheet and various types of moldings. Furthermore, the olefin/(meth)acrylate block copolymer obtained can be used as an additive to another polymer.

Since the olefnl(meth)acrylate block copolymer of the present invention is formed of two polymer segments mutually immiscible, the copolymer is separated into phases, i.e., regions (micro domains) formed of respective polymer segments, due to short-range interaction caused by repulsion between chemically different polymer segments. The individual micro domains herein are specifically arranged orderly due to the effect of the long-range interaction caused by the polymer segments covalently bonded. The structure formed by assembling micro domains formed of each polymer segment is called a micro phase-separation structure.

Morphology of the olefin/(meth)acrylate block copolymer of the present invention is characterized by having a fine micro phase-separation structure. The morphology may vary depending upon the composition ratio between the polyolefin segment and the poly(meth)acrylate segment. Examples of the morphology include crystalline structures such as a spherical micelle structure, a lamellar structure, a cylindrical structure and a gyroidal structure.

A method for observing the morphology of the olefin/(meth)acrylate block copolymer is not particularly limited, examples of which include a method in which a film is stained with a coloring agent, cut into thin pieces and observed by TEM. Examples of the coloring agents used for staining herein include ruthenium tetroxide, osmium tetroxide, phosphotungstin acid, chloro sulfinate/uranyl acetate, osmium tetroxide/hydrazine and silver sulfide. More specifically, for staining a saturated hydrocarbon such as polyethylene and polypropylene, ruthenium tetroxide, phosphotungstin acid and chloro sulfinate/uranyl acetate are used. For staining an unsaturated hydrocarbon, osmium tetroxide and ruthenium tetroxide are used. For staining an ester, osmium tetroxide/hydrazine, phosphotungstin acid and silver sulfide are used.

[Method for producing olefin/(meth)acrylate block copolymer]

Examples of a method for producing the olefin/(meth)acrylate block copolymer of the present invention include a production method using a polymerization catalyst capable of polymerizing either one of an olefin and a (meth)acrylate compound.

Examples of the polymerization catalyst include a polymerization catalyst obtained by bringing a transition

metal complex represented by formula (1):

[Chemical Formula 2]

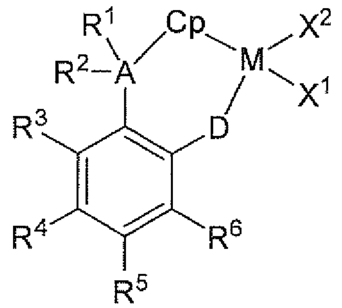

(1)

[in formula (1), M represents a group-IV element of the periodic table, A represents a group-XIV element of the periodic table, D represents a group-XVI element of the periodic table, Cp represents a group having a cyclopentadienyl type anion skeleton, $R^1$, $R^2$, $R^3$, $R^4$, $R^5$ and $R^6$ are the same or different and represent a hydrogen atom, a halogen atom, an alkyl group having 1 to 20 carbon atoms, an aryl group having 6 to 20 carbon atoms, an aralkyl group having 7 to 20 carbon atoms, a silyl group substituted with a hydrocarbon group having 1 to 20 carbon atoms, an alkoxy group having 1 to 20 carbon atoms, an aryloxy group having 6 to 20 carbon atoms, an aralkyloxy group having 7 to 20 carbon atoms or an amino group substituted with a hydrocarbon group having 1 to 20 carbon atoms, the alkyl group, aryl group, aralkyl group, alkoxy group, aryloxy group, aralkyloxy group and hydrocarbon group in $R^1$, $R^2$, $R^3$, $R^4$, $R^5$ and $R^6$ may respectively be substituted with a halogen atom, $R^1$ and $R^2$ may join to form a ring, $R^3$ and $R^4$, $R^4$ and $R^5$, and $R^5$ and $R^6$ each optionally join to form a ring, $X^1$ and $X^2$ represent an alkyl group having 1 to 20 carbon atoms, an aryl group having 6 to 20 carbon atoms and an aralkyl group having 7 to 20 carbon atoms, the alkyl group, aryl group and aralkyl group in $X^1$ and $X^2$ may respectively be each substituted with a halogen atom],
into contact with at least one boron compound selected from the group consisting of the compounds represented by formulas (B1), (2) and (B3):

$BQ^1Q^2Q^3$ (B1)

$G^+(BQ^1Q^2Q^3Q^4)^-$ (B2)

$(L^1\text{-}H)^+(BQ^1Q^2Q^3Q^4)^-$ (B3)

[in formulas (B1), (2) and (B3), B represents a boron atom having a trivalent atomic valu, $Q^1$, $Q^2$, $Q^3$ and $Q^4$ each independently represent a halogen atom, a hydrocarbon group, a halogenated hydrocarbon group, a substituted silyl group, an alkoxy group or a disubstituted amino group, $G^+$ represents an inorganic or organic cation and $L^1$ represents a neutral Lewis base].

In a transition metal complex (hereinafter, simply referred to as a transition metal complex (1)) represented by the above formula (1), examples of the group represented by Cp, having a cyclopentadienyl type anion skeleton include a substituted or unsubstituted cyclopentadienyl group, a substituted or unsubstituted indenyl group and a substituted or unsubstituted fluorenyl group. Specific examples of the group having a cyclopentadienyl type anion skeleton include a substituted or unsubstituted cyclopentadienyl group such as cyclopentadienyl, methylcyclopentadienyl, dimethylcyclopentadienyl, trimethylcyclopentadienyl, tetramethylcyclopentadienyl, ethylcyclopentadienyl, n-propylcyclopentadienyl, isopropylcyclopentadienyl, n-butylcyclopentadienyl, sec-butylcyclopentadienyl, tert-butylcyclopentadienyl, tetrahydroindenyl, octahydrofluorenyl, phenylcyclopentadienyl, trimethylsilylcyclopentadienyl and tert-butyldimethylsilylcyclopentadienyl; a substituted or unsubstituted indenyl group such as indenyl, methylindenyl, dimethylindenyl, ethylindenyl, n-propylindenyl, isopropylindenyl, n-butylindenyl, sec-butylindenyl, tert-butylindenyl and phenylindenyl; and a substituted or unsubstituted fluorenyl group such as fluorenyl, 2-methylfluorenyl, 2,7-dimethylfluorenyl, 2-ethylfluorenyl, 2,7-diethylfluorenyl, 2-n-propylfluorenyl, 2,7-di-n-propylfluorenyl, 2-isopropylfluorenyl, 2,7-diisopropylfluorenyl, 2-n-butylfluorenyl, 2-sec-butylfluorenyl, 2-tert-butylfluorenyl, 2,7-di-n-butylfluorenyl, 2,7-di-sec-butylfluorenyl, 2,7-di-tert-butylfluorenyl, 3,6-di-tert-butylfluorenyl, 2-phenylfluorenyl, 2,7-di-phenylfluorenyl and 2-methylphenylfluorenyl. Of these, cyclopentadienyl,

methylcyclopentadienyl, dimethylcyclopentadienyl, trimethylcyclopentadienyl, tetramethylcyclopentadienyl and tert-butylcyclopentadienyl are preferable.

In the transition metal complex (1), examples of the group-XIV element of the periodic table represented by A include a carbon atom, a silicon atom and a germanium atom, and preferably include a carbon atom and a silicon atom.

In the transition metal complex (1), examples of the group-XVI element of the periodic table represented by D include an oxygen atom, a sulfur atom and a selenium atom, and preferably include an oxygen atom.

In the transition metal complex (1), examples of the group-IV element of the periodic table represented by M include a titanium atom, a zirconium atom and a hafnium atom, and preferably include a titanium atom.

In the substituents $R^1$, $R^2$, $R^3$, $R^4$, $R^5$ and $R^6$, examples of the halogen atom include a fluorine atom, a chlorine atom, a bromine atom and an iodine atom, and preferably include a chlorine atom.

In the substituents $R^1$, $R^2$, $R^3$, $R^4$, $R^5$, $R^6$, $X^1$ and $X^2$, specific examples of the alkyl group having 1 to 20 carbon atoms include methyl, ethyl, n-propyl, isopropyl, n-butyl, sec-butyl, tert-butyl, n-pentyl, neopentyl, amyl, n-hexyl, heptyl, n-octyl, n-nonyl, n-decyl, n-dodecyl, n-tridecyl, tetradecyl, pentadecyl, hexadecyl, heptadecyl, octadecyl, nonadecyl, and n-eicosyl; and methyl, ethyl, isopropyl, tert-butyl and amyl are preferable.

In the substituents $R^1$, $R^2$, $R^3$, $R^4$, $R^5$, $R^6$, $X^1$ and $X^2$, specific examples of the halogen-substituted alkyl group having 1 to 20 carbon atoms include these alkyl groups substituted with a halogen atom such as fluorine atom, a chlorine atom, a bromine atom or an iodine atom.

In the substituents $R^1$, $R^2$, $R^3$ $R^4$ $R^5$, $R^6$, $X^1$ and $X^2$, specific examples of the aryl group having 6 to 20 carbon atoms include phenyl, 2-tolyl, 3-tolyl, 4-tolyl, 2,3-xylyl, 2,4-xylyl, 2,5-xylyl, 2,6-xylyl, 3,4-xylyl, 3,5-xylyl, 2,3,4-trimethylphenyl, 2,3,5-trimethylphenyl, 2,3,6-trimethylphenyl, 2,4,6-trimethylphenyl, 3,4,5-trimethylphenyl, 2,3,4,5-tetramethylphenyl, 2,3,4,6-tetramethylphenyl, 2,3,5,6-tetramethylphenyl, pentamethylphenyl, ethylphenyl, n-propylphenyl, isopropylphenyl, n-butylphenyl, sec-butylphenyl, tert-butylphenyl, n-pentylphenyl, neopentylphenyl, n-hexylphenyl, n-octylphenyl, n-decylphenyl, n-dodecylphenyl, n-tetradecylphenyl, naphthyl and anthracenyl. Of these, phenyl is preferable.

In substituents $R^1$, $R^2$, $R^3$, $R^4$, $R^5$, $R^6$, $X^1$ and $X^2$, specific examples of the halogen-substituted aryl group having 6 to 20 carbon atoms include these aryl groups substituted with a halogen atom such as a fluorine atom, a chlorine atom, a bromine atom or an iodine atom.

In the substituents $R^1$, $R^2$, $R^3$, $R^4$, $R^5$, $R^6$, $X^1$ and $X^2$, specific examples of the aralkyl group having 7 to 20 carbon atoms include benzyl, (2-methylphenyl)methyl, (3-methylphenyl)methyl, (4-methylphenyl)methyl, (2,3-dimethylphenyl)methyl, (2,4-dimethylphenyl)methyl, (2,5-dimethylphenyl)methyl, (2,6-dimethylphenyl)methyl, (3,4-dimethylphenyl)methyl, (4,6-dimethylphenyl)methyl, (2,3,4-trimethylphenyl)methyl, (2,3,5-trimethylphenyl)methyl, (2,3,6-trimethylphenyl)methyl, (3,4,5-trimethylphenyl)methyl, (2,4,6-trimethylphenyl)methyl, (2,3,4,5-tetramethylphenyl)methyl, (2,3,4,6-tetramethylphenyl)methyl, (2,3,5,6-tetramethylphenyl)methyl, (pentamethylphenyl)methyl, (ethylphenyl)methyl, (n-propylphenyl)methyl, (isopropylphenyl)methyl, (n-butylphenyl)methyl, (sec-butylphenyl)methyl, (tert-butylphenyl)methyl, (n-pentylphenyl)methyl, (neopentylphenyl)methyl, (n-hexylphenyl)methyl, (n-octylphenyl)methyl, (n-deeylphenyl) methyl, (n-decylphenyl)methyl, naphthylmethyl and anthracenylmethyl. Of these, benzyl is preferable.

In the substituents $R^1$, $R^2$, $R^3$, $R^4$, $R^5$, $R^6$, $X^1$ and $X^2$, specific examples of the halogen-substituted aralkyl group having 7 to 20 carbon atoms include these aralkyl groups substituted with an halogen atom such as a fluorine atom, a chlorine atom, a bromine atom or an iodine atom.

In the substituents $R^1$, $R^2$, $R^3$, $R^4$, $R^5$ and $R^6$, examples of a hydrocarbon group of the silyl group substituted with a hydrocarbon group include an alkyl group having 1 to 10 carbon atoms such as methyl, ethyl, n-propyl, isopropyl, n-butyl, sec-butyl, tert-butyl, isobutyl, n-pentyl, n-hexyl, cyclohexyl, n-heptyl, n-octyl, n-nonyl and n-decyl; and an aryl group such as phenyl. Specific examples of the silyl group substituted with a hydrocarbon having 1 to 20 carbon atoms include a silyl group with a single substituent having 1 to 20 carbon atoms such as methylsilyl, ethylsilyl and phenylsilyl; a disubstituted silyl group substituted with a hydrocarbon group having 1 to 20 carbon atoms such as dimethylsilyl, diethylsilyl and diphenylsilyl; and a trisubstituted silyl group substituted with a hydrocarbon group having 1 to 20 carbon atoms such as trimethylsilyl, triethylsilyl, tri-n-propylsilyl, triisopropylsilyl, tri-n-butylsilyl, tri-sec-butylsilyl, tri-tert-butylsilyl, tri-isobutylsilyl, tert-butyl-dimethylsilyl, tri-n-pentylsilyl, tri-n-hexylsilyl, tricyclohexylsilyl and triphenylsilyl. Of these, trimethylsilyl, tertbutyldimethylsilyl and triphenylsilyl are preferable.

As the hydrocarbon group constituting these substituted silyl groups include, in addition to the hydrocarbon groups mentioned above, a hydrocarbon group substituted with a halogen atom such as a fluorine atom, a chlorine atom, a bromine atom or an iodine atom is exemplified.

In the substituents $R^1$, $R^2$, $R^3$, $R^4$, $R^5$ and $R^6$, specific examples of the alkoxy group having 1 to 20 carbon atoms include methoxy, ethoxy, n-propoxy, isopropoxy, n-butoxy, sec-butoxy, tert-butoxy, n-pentyloxy, neopentyloxy, n-hexyloxy, n-octyloxy, n-nonyloxy, n-decyloxy, n-dodecyloxy, n-undecyloxy, n-dodecyloxy, tridecyloxy, tetradecyloxy, n-pentadecyloxy, hexadecyloxy, heptadecyloxy, octadecyloxy, nonadecyloxy and n-eicosyloxy. Of these, methoxy, ethoxy and tert-butoxy are preferable.

Specific examples of the halogen-substituted alkoxy group having 1 to 20 carbon atoms include these alkoxy groups substituted with a halogen atom such as a fluorine atom, a chlorine atom, a bromine atom or an iodine atom.

In the substituents $R^1$, $R^2$, $R^3$, $R^4$, $R^5$ and $R^6$, specific examples of the aryloxy group having 6 to 20 carbon atoms include phenoxy, 2-methylphenoxy, 3-methylphenoxy, 4-methylphenoxy, 2,3-dimethylphenoxy, 2,4-dimethylphenoxy, 2,5-dimethylphenoxy, 2,6-dimethylphenoxy, 3,4-dimethylphenoxy, 3,5-dimethylphenoxy, 2,3,4-trimethylphenoxy, 2,3,5-trimethylphenoxy, 2,3,6-trimethylphenoxy, 2,4,5-trimethylphenoxy, 2,4,6-trimethylphenoxy, 3,4,5-trimethylphenoxy, 2,3,4,5-tetramethylphenoxy, 2,3,4,6-tetramethylphenoxy, 2,3,5,6-tetramethylphenoxy, pentamethylphenoxy, ethylphenoxy, n-propylphenoxy, isopropylphenoxy, n-butylphenoxy, sec-butylphenoxy, tert-butylphenoxy, n-hexylphenoxy, n-octylphenoxy, n-decylphenoxy, n-tetradecylphenoxy, naphthoxy and anthracenoxy. Of these, phenoxy and naphthoxy are preferable.

Specific examples of the halogen-substituted aryloxy group having 6 to 20 carbon atoms include the aryloxy groups having 6 to 20 carbon atoms above substituted with a halogen atom such as a fluorine atom, a chlorine atom, a bromine atom or an iodine atom.

In the substituents $R^1$, $R^2$, $R^3$, $R^4$, $R^5$ and $R^6$, specific examples of the aralkyloxy group having 7 to 20 carbon atoms include, benzyloxy, (2-methylphenyl)methoxy, (3-methylphenyl)methoxy, (4-methylphenyl)methoxy, (2,3-dimethylphenyl)methoxy, (2,4-dimethylphenyl)methoxy, (2,5-dimethylphenyl)methoxy, (2,6-dimethylphenyl)methoxy, (3,4-dimethylphenyl)methoxy, (3,5-dimethylphenyl)methoxy, (2,3,4-trimethylphenyl)methoxy, (2,3,5-trimethylphenyl)methoxy, (2,3,6-trimethylphenyl)methoxy, (2,4,5-trimethylphenyl)methoxy, (2,4,6-trimethylphenyl)methoxy, (3,4,5-trimethylphenyl)methoxy, (2,3,4,5-tetramethylphenyl)methoxy, (2,3,4,6-tetramethylphenyl)methoxy, (2,3,5,6-tetramethylphenyl) methoxy, (pentamethylphenyl)methoxy, (ethylphenyl)methoxy, (n-propylphenyl)methoxy, (isopropylphenyl)methoxy, (n-butylphenyl)methoxy, (sec-butylphenyl)methoxy, (tert-butylphenyl)methoxy, (n-hexylphenyl)methoxy, (n-octylphenyl) methoxy, (n-decylphenyl)methoxy, naphthylmethoxy and anthracenylmethoxy. Of these, benzyloxy is preferable.

Specific examples of the halogen-substituted aralkyloxy group having 7 to 20 carbon atoms include these aralkyloxy groups substituted with a halogen atom such as a fluorine atom, a chlorine atom, a bromine atom or an iodine atom.

In the substituents $R^1$, $R^2$, $R^3$, $R^4$, $R^5$ and $R^6$, the amino group substituted with a hydrocarbon group having 1 to 20 carbon atoms is an amino group substituted with two hydrocarbon groups. Examples of the hydrocarbon group herein include an alkyl group having 1 to 20 carbon atoms such as methyl, ethyl, n-propyl, isopropyl, n-butyl, sec-butyl, tert-butyl, isobutyl, n-pentyl, n-hexyl and cyclohexyl; and an aryl group such as phenyl. These substituents may mutually join to form a ring. Examples of the amino group substituted with a hydrocarbon group having 1 to 20 carbon atoms include dimethylamino, diethyl amino, di-n-propylamino, diisopropylamino, di-n-butylamino, di-sec-butylamino, di-tert-butylamino, di-isobutylamino, tert-butylisopropylamino, di-n-hexylamino, di-n-octylamino, di-n-decylamino, diphenylamino, bistrimethylsilylamino, bis-tert-butyldimethylsilylamino, pyrrolyl, pyrrolidinyl, piperidinyl, carbazolyl, dihydroindolyl and dihydroisoindolyl. Of these, dimethylamino, diethylamino, pyrrolidinyl and piperidinyl are preferable.

The hydrocarbon groups constituting these substituted amino groups include, in addition to the hydrocarbon groups above, hydrocarbon groups substituted with a halogen atom such as a fluorine atom, a chlorine atom, a bromine atom or an iodine atom.

$R^1$ and $R^2$ may join to form a ring. Of $R^3$, $R^4$, $R^5$ and $R^6$, two substituents whose substitution sites are next to each other may optionally join to form a ring.

Examples of the ring formed by joining $R^1$ and $R^2$ and the ring formed by joining two substituents of $R^3$, $R^4$, $R^5$ and $R^6$ whose substitution sites are adjacent to each other include a saturated or unsaturated hydrocarbon ring substituted with a hydrocarbon group having 1 to 20 carbon atoms. Specific examples thereof include a cyclopropane ring, a cyclobutane ring, a cyclopentane ring, a cyclohexane ring, a cycloheptane ring, a cyclooctane ring, a benzene ring, a naphthalene ring and an anthracene ring.

Examples of the transition metal complex (1) of the present invention include dimethylsilylene(2,3,4,5-tetramethylcyclopentadienyl)(2-phenoxy)dimethyltitanium, dimethylsilylene(2,3,4,5-tetramethylcyclopentadienyl)(3,5-dimethyl-2-phenoxy)dimethyltitanium, dimethylsilylene(2,3,4,5-tetramethylcyclopentadienyl)(3-tert-butyl-2-phenoxy)dimethyltitanium, dimethylsilylene(2,3,4,5-tetramethylcyclopentadienyl)(3-tert-butyl-5-methyl-2-phenoxy)dimethyltitanium, dimethylsilylene(2,3,4,5-tetramethylcyclopentadienyl)(3-phenyl-2-phenoxy)dimethyltitanium, dimethylsilylene(2,3,4,5-tetramethylcyclopentadienyl)(3-tertbutyldimethylsilyl-5-methyl-2-phenoxy)dimethyltitanium, dimethylsilylene(2,3,4,5-tetramethylcyclopentadienyl)(3-trimethylsilyl-5-methyl-2-phenoxy)dimethyltitanium, dimethylsilylene(2,3,4,5-tetramethylcyclopentadienyl)(3-tert-butyl-5-methoxy-2-phenoxy)dimethyltitanium, dimethylsilylene(2,3,4,5-tetramethylcyclopentadienyl)(3-tert-butyl-5-chloro-2-phenoxy)dimethyltitanium, dimethylsilylene(cyclopentadienyl)(2-phenoxy)dimethyltitanium, dimethylsilylene(cyclopentadienyl)(3,5-dimethyl-2-phenoxy)dimethyltitanium, dimethylsilylene(cyclopentadienyl)(3-tert-butyl-2-phenoxy)dimethyltitanium, dimethylsilylene(cyclopentadienyl)(3-tert-butyl-5-methyl-2-phenoxy)dimethyltitanium, dimethylsilylene(cyclopentadienyl)(3-phenyl-2-phenoxy)dimethyltitanium, dimethylsilylene(cyclopentadienyl)(3-tertbutyldimethylsilyl-5-methyl-2-phenoxy)dimethyltitanium, dimethylsilylene(cyclopentadienyl)(3-trimethylsilyl-5-methyl-2-phenoxy)dimethyltitanium, dimethylsilylene(cyclopentadienyl)(3-tert-butyl-5-methoxy-2-phenoxy)dimethyltitanium, dimethylsilylene(cyclopentadienyl)(3-tert-butyl-5-chloro-2-phenoxy)dimethyltitanium, dimethylsilylene(indenyl)(2-phenoxy)dimethyltitanium, dimethylsilylene(indenyl)(3,5-dimethyl-2-phenoxy)dimethyltitanium, dimethylsilylene(indenyl)(3-tert-butyl-2-phenoxy)dimethyltitanium, dimethylsilylene(indenyl)(3-tert-butyl-5-methyl-2-phenoxy)dimethyltitanium, dimethylsilylene(indenyl)(3-phenyl-2-phenoxy)dimethyltitanium, dimethylsilylene(indenyl)(3-tertbutyldimethylsilyl-5-methyl-2-phenoxy)dimethyltitanium, dimethylsilylene(indenyl)(3-trimethylsilyl-5-methyl-2-phenoxy)dimethyltitanium, dimethylsilylene(indenyl)(3-tert-butyl-5-methoxy-2-phenoxy)dimethyltitanium, dimethylsilylene(indenyl)(3-tert-butyl-5-chloro-2-phenoxy)dimethyltitanium, dimethylsilylene(fluorenyl)(2-phenoxy)dimethyltitanium, dimethylsilylene(fluorenyl)(3,5-dimethyl-2-phenoxy)dimethyltitanium, dimethylsilylene(fluorenyl)(3-tert-butyl-2-phenoxy)dimethyltitanium, dimethylsilylene(fluorenyl)(3-tert-butyl-5-methyl-2-phenoxy)dimethyltitanium, dimethylsilylene(fluorenyl)(3-phenyl-2-phenoxy)dimethyltitanium, dimethylsilylene(fluorenyl)(3-tertbutyldimethylsilyl-5-methyl-2-phenoxy)dimethyltitanium, dimethylsilylene(fluorenyl)(3-trimethylsilyl-5-methyl-2-phenoxy)dimethyltitanium, dimethylsilylene(fluorenyl)(3-tert-butyl-5-methoxy-2-phenoxy)dimethyltitanium and dimethylsilylene(fluorenyl)(3-tert-butyl-5-chloro-2-phenoxy)dimethyltitanium.

Furthermore, examples of the transition metal complex (1) also include a compound having diethylsilylene, diphenylsilylene, isopropylidene or diphenylmethylene in place of dimethylsilylene; a compound having methylcyclopentadienyl, 2,4-dimethylcyclopentadienyl, 3,4-dimethylcyclopentadienyl or 2,3,4-trimethylcyclopentadienyl in place of cyclopentadienyl; a compound having diphenyltitanium or dibenzyltitanium in place of dimethyltitanium and a compound having zirconium or hafnium in place of titanium.

In the method of reacting a transition metal complex (1) with at least one boron compound (hereinafter, referred to as a boron compound (B)) selected from the group consisting of the compounds represented by formulas (B1) to (B3) above, the reaction is generally conducted by adding the transition metal complex (1) to a solvent, and thereafter, adding the boron compound (B).

The use amount of boron compound (B) falls within the range of generally 0.5 to 5 mole, and preferably 0.7 to 1.5 mole, per mole of a transition metal complex (1).

The reaction temperature is generally from -100°C to the boiling point of a solvent, and preferably within the range of -80°C to 60°C.

A reaction is generally conducted in a solvent inactive to the reaction. Examples of the solvent include non-proton solvents including an aromatic hydrocarbon solvent such as benzene and toluene; an aliphatic hydrocarbon solvent such as hexane and heptane; an ether solvent such as diethyl ether, tetrahydrofuran and 1,4-dioxane; and a halogen solvent such as dichloromethane, dichloroethane, chloro benzene and dichlorobenzene. The solvents are used singly or as a mixture of two or more kinds. The use amount thereof is generally 1 to 200 parts by weight, and preferably 3 to 50 parts by weight, per part of a transition metal complex (1).

After completion of the reaction, the resultant reaction mixture can be directly used as, for example, a catalyst for polymerization of an olefin/(meth)acrylate block copolymer. Furthermore, a catalyst for polymerization of an olefin/(meth)acrylate block copolymer is obtained by concentrating the solvent of the reaction mixture to give a precipitate, followed by isolation, e.g., by filtration, and thereafter put in use. In the case where the catalyst for polymerization of an olefin/(meth)acrylate block copolymer is obtained in the form of oil insoluble in a solvent, the catalyst for polymerization of the olefin/(meth)acrylate block copolymer may be separated by a separation procedure and then put in use.

The transition metal complex (1) can be obtained, for example, by the reaction between a known dihalogenated titanium complex (see for example, Patent Document 1) and an alkyl lithium compound or alkyl magnesium compound in accordance with a known technique.

The boron compound (B) used in the present invention is at least one boron compound selected from the group consisting of the compounds represented by the following formulas (B1) to (B3).

(B1): Boron compound represented by $BQ^1Q^2Q^3$
(B2): Boron compound represented by $G^+(BQ^1Q^2Q^3Q^4)^-$
(B3): Boron compound represented by $(L^1\text{-}H)^+(BQ^1Q^2Q^3Q^4)^-$

(in formulas, B represents a boron atom having a trivalent atomic value, $Q^1$, $Q^2$, $Q^3$ and $Q^4$ each independently represent a halogen atom, a hydrocarbon group, a halogenated hydrocarbon group, a substituted silyl group, an alkoxy group or a disubstituted amino group, $G^+$ represents an inorganic or organic cation and $L^1$ represents a neutral Lewis base).

In a boron compound represented by the above formula (B1), B represents a boron atom having a trivalent atomic value. $Q^1$ to $Q^3$ are preferably each independently a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or a disubstituted amino group having 2 to 20 carbon atoms, and more preferably, a halogen atom, a hydrocarbon group having 1 to 20 carbon atoms or halogenated hydrocarbon group having 1 to 20 carbon atoms.

Examples of the boron compound represented by formula (B1) above include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, and phenylbis(pentafluorophenyl)borane, and preferably, tris(pentafluorophenyl)borane.

In the boron compound represented by the above formula (B2), $G^+$ is an inorganic or organic cation, B is a

boron atom having a trivalent atomic value and $Q^1$ to $Q^4$ are the same as defined in $Q^1$ to $Q^3$ in the above (B1).

In the boron compound represented by the above formula (B2), examples of $G^+$ being an inorganic cation include a ferrocenium cation, an alkyl-substituted ferrocenium cation and a silver cation. Examples of $G^+$ being an organic cation include a triphenylmethyl cation. Furthermore, examples of $(BQ^1Q^2Q^3Q^4)^-$ include tetrakis(pentafluorophenyl) borate, tetrakis(2,3,5,6-tetrafluorophenyl)borate, tetrakis(2,3,4,5-tetrafluorophenyl)borate, tetrakis(3,4,5-trifluorophenyl) borate, tetrakis(2,2,4-trifluorophenyl)borate, phenylbis(pentafluorophenyl)borate and tetrakis(3,5-bistrifluoromethylphenyl)borate.

Examples of the boron compound represented by the above formula (B2) include ferroceniumtetrakis(pentafluorophenyl)borate, 1,1'-dimethylferroceniumtetrakis(pentafluorophenyl)borate, silver tetrakis(pentafluorophenyl)borate, triphenylmethyltetrakis(pentafluorophenyl)borate and triphenylmethyltetrakis(3,5-bistrifluoromethylphenyl)borate; and preferably, triphenylmethyltetrakis(pentafluorophenyl)borate.

In the boron compound represented by the above formula (B3), $L^1$ is a neutral Lewis base, $(L^1\text{-}H)^+$ is Broensted acid, B represents a boron atom having a trivalent atomic value, and $Q^1$ to $Q^4$ are the same as defined in $Q^1$ to $Q^3$ in the above (B 1).

In the boron compound represented by the above formula (B3), examples of $(L^1\text{-}H)^+$ include trialkyl substituted ammonium, N,N-dialkylanilinium, dialkylammonium and triarylphosphonium, and examples of $(BQ^1Q^2Q^3Q^4)^-$ are the same as mentioned above.

Examples of the boron compound represented by the above formula (B3) include triethylammoniumtetrakis (pentafluorophenyl)borate, tripropylammoniumtetrakis(pentafluorophenyl)borate, tri(n-butyl)ammoniumtetrakis(pentafluorophenyl)borate, tri(n-butyl)ammoniumtetrakis(3,5-bistrifluoromethylphenyl)borate, N,N-dimethylaniliniumtetrakis (pentafluorophenyl)borate, N,N-diethyl aniliniumtetrakis(pentafluorophenyl)borate, N,N-2,4,6-pentamethylaniliniumtetrakis(pentaflurophenyl)borate, N,N-dimethylaniliniumtetrakis(3,5-bistrifluoromethylphenyl)borate, diisopropylammoniumtetrakis(pentafluorophenyl)borate, dicyclohexylammoniumtetrakis(pentafluorophenyl)borate, triphenylphosphoniumtetrakis(pentafluorophenyl)borate, tri(methylphenyl)phosphoniumtetrakis(pentafluorophenyl)borate and tri(dimethylphenyl)phosphoniumtetrakis(pentafluorophenyl)borate; and preferably, tri(n-butyl)ammoniumtetrakis(pentafluorophenyl)borate or N,N-dimethylaniliniumtetrakis(pentafluorophenyl)borate.

As the boron compound (B), generally, any one of a boron compound represented by the above formula (B1), a boron compound represented by the above formula (B2) and a boron compound represented by the above formula (B3) is used or a mixture of two or more optional boron compounds represented by formula (B1), (B2) or (B3).

As a method for producing the olefin/(meth)acrylate block copolymer of the present invention, mentioned is a method of obtaining an olefin/(meth)acrylate block copolymer by a step of polymerizing an olefin in the presence of a transition metal complex (1) and a boron compound (B) and then continuously adding thereto a (meth)acrylate to polymerize the (meth)acrylate.

Although a method for initiating polymerization is not particularly limited, examples of the method include a method of adding an olefin to a solution, in which a transition metal complex (1) is previously brought into contact with a boron compound (B), to initiate polymerization, or, a method of adding a transition metal complex (1) to a solution, in which a boron compound (B) is previously brought into contact with an olefin, to initiate polymerization.

For the use amount of each of the catalyst components, the molar ratio of boron compound (B)/a transition metal complex (1) is generally 0.1 to 100, preferably 0.5 to 10, and more preferably 0.8 to 2.

For the concentration of each of the catalyst components used in the state of solution, the concentration of a transition metal complex (1) is generally 0.0001 to 5 mmol/L and preferably, 0.001 to 1 mmol/L. The concentration of a boron compound (B) is generally 0.0001 to 5 mmol/L, and preferably, 0.001 to 1 mmol/L.

As the olefin to be used for polymerization, a linear olefin and a cyclic olefin, etc. can be used. Homopolymerization may be performed by using one olefin, or copolymerization may be performed by using not less than two kinds of olefins. Generally, as the olefin, an olefin having 2 to 20 carbon atoms is used.

Specific examples of the olefin to be used include $\alpha$-olefin having 3 to 20 carbon atoms such as ethylene, propylene, 1-butene, 1-pentene, 1-hexene, 1-heptene, 1-octene, 1-nonene, 1-decene, 3-methyl-1-pentene, 4-methyl-1-pentene, 3,3-dimethyl-1-butene, 5-methyl,-1-hexene and 3,3-dimethyl-1-pentene; a non-conjugated diene such as 1,5-hexadiene, 1,4-hexadiene, 1,4-pentadiene, 1,5-heptadiene, 1,6-heptadiene, 1,6-octadiene, 1,7-octadiene, 1,7-nonadiene, 1,8-nonadiene, 1,8-decadiene, 1,9-decadiene, 1,12-tetradecadiene, 1,13-tetradecadiene, 4-methyl-1,4-hexadiene, 5-methyl-1,4-hexadiene, 7-methyl-1,6-octadiene, 3-methyl-1,4-hexadiene, 3-methyl-1,5-hexadiene, 3-ethyl-1,4-hexadiene, 3-ethyl-1,5-hexadiene, 3,3-dimethyl-1,4-hexadiene and 3,3-dimethyl-1,5-hexadiene; a conjugated diene such as 1,3-butadiene, isoprene, 1,3-hexadiene and 1,3-octadiene; a monoolefin such as vinylcyclopentane, vinylcyclohexane, vinylcycloheptane, norbarnene, 5-methyl-2-norbomene, 5-ethyl-2-norbornene, 5-butyl-2-norbornene, tetracyclododecene, tricyclodecene, tricycloundecene, pentacyclopentadecene, pentacyclohexadecene, 8-methyltetracyclododecene and 8-ethyltetracyclododecene; a non-conjugated diene such as 5-ethylidene-2-norbomene, dicyclopentadiene, 5-vinyl-2-norbomene, norbomadiene, 5-methylene-2-norbornene, 1,5-cyclooctadiene, 7-methyl-2,5-norbornadiene, 7-ethyl-2,5-norbomadiene, 7-propyl-2,5-norbornadiene, 7-butyl-2,5-norbornadiene, 7-pentyl-2,5-norbornadiene,

7-hexyl-2,5-norbornadiene, 7,7-dimethyl-2,5-norbornadiene, 7,7-methylethyl-2,5-norbornadiene, 7-chloro-2,5-norbomadiene, 7-bromo-2,5-norbornadiene, 7-fluoro-2,5-norbornadiene, 7,7-dichloro-2,5-norbornadiene, 1-methyl-2,5-norbornadiene, 1-ethyl-2,5-norbornadiene, 1-propyl-2,5-norbarnadiene, 1-butyl-2,5-norbornadiene, 1 -chloro-2,5-norbornadiene, 1-bromo-2,5-norbomadiene, 5,8-endomethylenehexahydronaphthalene and vinylcyclohexene; a conjugated diene such as 1,3-cyclooctadiene and 1,3-cyclohexadiene; and a styrene compound such as styrene, o-methylstyrene, m-methylstyrene, p-methylstyrene, o, p-dimethylstyrene, o-ethylstyrene, m-ethylstyrene, p-ethylstyrene, $\alpha$-methylstyrene and divinylbenzene.

Examples of a combination of olefins for use in copolymerization of olefins include a combination of linear olefin/linear olefin such as ethylene/propylene, ethylene/1-butene, ethylene/1-hexene, ethylene/propylene/1-butene, ethylene/propylene/1-hexene, propylene/1-butene and propylene/1-hexene; and a combination of linear olefin/cyclic olefin such as ethylene/vinylcyclohexane, ethylene/norbornene, ethylene/tetracyclododecene, ethylene/5-ethylidene-2-norbomene, propylene/vinylcyclohexane, propylene/norbomene, propylene/tetracyclododecene, propylene/5-ethylidene-2-norbornene and ethylene/propylene/5-ethylidene-2-norbornene.

Although a polymerization method is not particularly limited, for example, examples of the polymerization method include solvent polymerization or slurry polymerization using an aliphatic hydrocarbon (butane, pentane, hexane, heptane, octane, etc.), an aromatic hydrocarbon (benzene, toluene, etc.), an ether (diethylether, tetrahydrofuran, 1,4-dioxane, etc.) or a halogenated hydrocarbon (dichloromethane, dichloroethane, etc.) as a solvent and gas-phase polymerization performed in a gaseous monomer. Polymerization can be performed in either a continuous process or a batch process.

The polymerization temperature may fall within the range of - 50°C to 300°C, and particularly preferably within the range of -20°C to 250°C. The polymerization pressure is preferably ordinary pressure to 90 MPa. The polymerization time, which is appropriately determined depending upon the type of desired polymer and a reaction apparatus, generally falls within the range of 1 minute to 20 hours.

Examples of the (meth)acrylate compound to be used in polymerization include a methacrylate compound such as methyl methacrylate, ethyl methacrylate, isopropyl methacrylate, n-butyl methacrylate, tert-butyl methacrylate, cyclohexyl methacrylate, isobutyl methacrylate, benzyl methacrylate, allyl methacrylate and isobornyl methacrylate; and an acrylate compound such as methyl acrylate, ethyl acrylate, isopropyl acrylate, n-butyl acrylate and tert-butyl acrylate.

Although these (meth)acrylate compounds can be homopolymerized, not less than two kinds of (meth)acrylate compounds can be copolymerized.

Although a method for copolymerizing not less than two kinds of (meth)acrylate compounds is not particularly limited, examples of the method include a method in which an olefin segment is polymerized and thereafter simultaneously adding not less than two kinds of (meth)acrylate compounds to obtain a random copolymer, and a method in which an olefin segment is polymerized and then a first (meth)acrylate is polymerized, and further adding a second (meth)acrylate and the following (meth)acrylates(s) to obtain a block copolymer.

The polymerization reaction is preferably performed under an atmosphere of an inert gas such as nitrogen or argon. In the present invention, in order to perform a block copolymerization with a (meth)acrylate, a preferable polymerization form of an olefin segment is living polymerization. To efficiently obtain a block copolymer, it is important to sufficiently dry an inert gas and a (meth)acrylate monomer until no water content is present.

In the production method of the present invention, when an olefin/(meth)acrylate block copolymer contains a homopolymer of an olefin or a (meth)acrylate, the olefin homopolymer or (meth)acrylate homopolymer can be removed by solvent fractionation.

For example, when an olefin segment is polymerized by a polymerization except living polymerization, the olefin/(meth)acrylate block copolymer obtained may sometimes contain an olefin homopolymer. In this case, the olefin/(meth)acrylate block copolymer and the olefin homopolymer can be separated by fractionation using the difference in solubility to a solvent. A fractionation method by a solvent is not particularly limited, examples of which include a method in which a mixture of an olefin/(meth)acrylate block copolymer and an olefin homopolymer is soaked in a solvent capable of dissolving the olefin homopolymer alone to obtain the olefin/(meth)acrylate block copolymer as an insoluble matter and a method in which a mixture of an olefin/(meth)acrylate block copolymer and an olefin homopolymer is soaked in a solvent capable of dissolving the olefin/(meth)acrylate block copolymer alone to obtain the olefin/(meth)acrylate block copolymer as a soluble matter. Specifically, a Soxhlet extraction method using a Soxhlet extractor is mentioned.

The olefin/(meth)acrylate block copolymer obtained contains a metal catalyst component. When a degree of polymerization thereof is high, the content of the metal catalyst component thereof is low. In this case, the metal catalyst component may not be removed. When the metal catalyst component must be removed, the olefin/(meth)acrylate block copolymer is washed with water and diluted hydrochloric acid, etc. to remove the metal catalyst component, followed by dehydration to obtain the olefnl(meth)acrylate block copolymer.

## Examples

The present invention will be more specifically described by way of experimental examples, below; however, the present invention is not limited to these experimental examples.

The number average molecular weight (Mn) and weight average molecular weight (Mw) in terms of polystyrene and molecular weight distribution (Mw/Mn) of each polymer were measured by gel permeation chromatography (GPC) in the following conditions.
Apparatus: HLC-8120GPC(RI)
Column: TSKgel, GMH HR-M
Flow rate: 0.5 mL/min
Measurement temperature: 40°C
Mobile phase: THF
Standard substance: polystyrene

The composition ratio of 1-hexene/methyl methacrylate in a polymer was obtained by measurement of a carbon nuclear magnetic resonance spectrum ($^{13}$C-NMR) in accordance with inverse gated decoupling in the following conditions.
Apparatus: AV600 type NMR manufactured by BRUKER
Sample cell: 5 mmϕ tube
Measurement solvent: $CDCl_3$
Sample concentration: 20 mg/0.6 mL ($CDCl_3$)
Measurement temperature: room temperature (about 25°C)
Measurement parameter: 5 mmϕ probe, EXMOD zgig30, OBNUC $^{13}$C, OBFRQ 151 MHz, cumulated number: 9200 times
Repeat time: ACQTM 0.9 seconds, PD 2 seconds
Internal standard: $^{13}$C:$CHCl_3$ (77 ppm)

[Example 1]

(Block copolymerization of ethylene/methyl methacrylate)

Under nitrogen, at room temperature, triphenylmethyltetrakis(pentafluorophenyl)borate (184.5 mg, 0.20 mmol) and dimethylsilylene(2,3,4,5-tetramethylcyclopentadienyl)(3-tert-butyl-5-methyl-2-phenoxy)dimethyltitanium (83.7 mg, 0.20 mmol) were stirred in toluene (5 mL) for 10 minutes. To the mixture, toluene (95 mL) was added and the mixture was injected to an autoclave. Thereafter, ethylene was introduced so as to obtain 0.2 MPa to initiate polymerization. One minute later, methyl methacrylate (4.04 g, 40.35 mmol) was added at one time and polymerization was continued further at 30°C. Polymerization was conducted for 3 hours and terminated by adding methanol (15 mL). Subsequently, a 5 wt% methanol solution (25 mL) of hydrochloric acid and methanol (500 mL) were added and stirred for one hour. Thereafter, a polymer was collected by filtration. The polymer was dried under vacuum (80°C, until a constant weight was obtained) to obtain a mixture (1.50 g) of a polyethylene/poly(methyl methacrylate) block copolymer and polyethylene as white solids.

[Example 2]

(Block copolymerization of propylene/methyl methacrylate)

Under nitrogen, at room temperature, triphenylmethyltetrakis(pentafluorophenyl)borate (184.5 mg, 0.20 mmol) and dimethylsilylene(2,3,4,5-tetramethylcyclopentadienyl)(3-tert-butyl-5-methyl-2-phenoxy)dimethyltitanium (83.7 mg, 0.20 mmol) were stirred in toluene (5 mL) for 10 minutes. To the mixture, toluene (95 mL) was added and the mixture was injected to an autoclave. Thereafter, propylene was introduced so as to obtain 0.2 MPa to initiate polymerization. One minute later, methyl methacrylate (4.12 g, 41.15 mmol) was added at one time and polymerization was continued further at 30°C. Polymerization was conducted for 3 hours and terminated by adding methanol (15 mL). Subsequently, a 5 wt% methanol solution (25 mL) of hydrochloric acid and methanol (500 mL) were added and stirred for one hour. Thereafter, a polymer was collected by filtration. The polymer was dried under vacuum (80°C, until a constant weight was obtained) to obtain a mixture (2.09 g) of a polypropylene/poly(methyl methacrylate) block copolymer and polypropylene as light yellow solids.

[Example 3]

(Block copolymerization of 1-hexene/methyl methacrylate)

Under nitrogen, triphenylmethyltetrakis(pentafluorophenyl)borate (461.2 mg, 0.50 mmol) and dimethylsilylene (2,3,4,5-tetramethylcyclopentadienyl)(3-tert-butyl-5-methyl-2-phcnoxy)dimethyltitanium (209.3 mg, 0.50 mmol) were stirred in toluene (91 mL) at room temperature for 10 minutes and the mixture was cooled to -30°C. To the mixture, 1-hexene (8.20 g, 97.43 mmol) was added in one time to initiate polymerization. Ten minutes later, methyl methacrylate (19.51 g, 194.87 mmol) was added in one time and polymerization was continued further at room temperature. Polymerization was conducted for 6 hours and terminated by adding a 5 wt% methanol solution (45.3 mL) of hydrochloric acid. Subsequently, methanol (1360 mL) was added and stirred for one hour and then a polymer was collected by filtration. After the polymer was dissolved in toluene (200 mL), the mixture was added dropwise to methanol (1360 mL) to precipitate the polymer and stirred for one hour. Thereafter, the polymer was collected again by filtration and dried under vacuum (80°C, until a constant weight was obtained) to obtain a mixture (27.4 g, yield 98.9%) of poly(1 hexene)/poly(methyl methacrylate) block copolymer and poly(1-hexene) as white solids. The polymer mixture obtained had Mn = 28,700 and Mw/Mn = 1.42. The composition ratio of 1-hexene/methyl methacrylate of the polymer mixture was 41/59.
The obtained polymer mixture was washed with hexane at 45°C to remove poly(1-hexene) (5.6 g, yield 20.3%). In this manner, a poly(1-hexene)/poly(methyl methacrylate) block copolymer (21.2 g, yield 76.7%) was obtained.
The removed poly(1-hexene) had Mn = 13,500 and Mw/Mn = 1.75. The composition ratio of 1-hexenelmethyl methacrylate was 100/0.
The obtained poly(1-hexene)/poly(methyl methacrylate) block copolymer had Mn = 38,200 and Mw/Mn = 1.19. The composition ratio of 1-hexene/methyl methacrylate was 17/83.

[Example 4]

The obtained poly(1-hexene)/poly(methyl methacrylate) block copolymer in Example 3 was press-molded at 220°C to obtain a press sheet of 0.1 cm in thickness.
The obtained press sheet was stained with $RuO_4$ and cut into thin pieces by a cryomicrotome. Morphology was observed by TEM (see Figure 1). A micro phase-separation showing cylindrical structure was observed and the polymer was confirmed as a block copolymer.

[Example 5]

(Block copolymerization of 1-hexene/methyl methacrylate)

Under nitrogen, at room temperature, triphenylmethyltetrakis(pentafluorophenyl)borate (461.2 mg, 0.50 mmol) and diethylsilylene(2,3,4,5-tetramethylcyclopentadienyl)(3-tert-butyl-5-methyl-2-phenoxy)dimethyltitanium (223.3 mg, 0.50 mmol) were stirred in toluene (91 mL) for 10 minutes. To the mixture, 1-hexene (7.78 g, 92.44 mmol) was added at one time to initiate polymerization. One minute later, methyl methacrylate (19.19 g, 191.67 mmol) was added at one time and polymerization was continued further at room temperature. Polymerization was conducted for 3 hours and a 5 wt% methanol solution (45.3 mL) of hydrochloric acid was added to terminate polymerization. Subsequently, methanol (1360 mL) was added and stirred for one hour, and thereafter, a polymer was collected by filtration. After the polymer was dissolved in toluene (200 mL), the mixture was added dropwise to methanol (1360 mL) to precipitate the polymer and stirred for one hour. Thereafter, the polymer was collected again by filtration and dried under vacuum (80°C, until a constant weight was obtained) to obtain a mixture (25.9 g, yield 95.9%) of poly(1-hexene)/poly(methyl methacrylate) block copolymer and poly(1-hexene) as white solids. The obtained polymer mixture had Mn = 29,200 and Mw/Mn = 1.56. The composition ratio of 1-hexenelmethyl methacrylate in a polymer mixture was 41/59.
The obtained polymer mixture was washed with hexane at 45°C to remove poly(1-hexene)(2.4 g, yield 8.7%). In this manner, a poly(1-hexene)/poly(methyl methacrylate) block copolymer (22.9 g, yield 84.9%) was obtained.
The removed poly(1-hexene) had Mn = 13,200 and Mw/Mn = 1.82. The composition ratio of 1-hexene/methyl methacrylate was 100/0.
The obtained poly(1-hexene)/poly(methyl methacrylate) block copolymer had Mn = 32,400 and Mw/Mn = 1.47. The composition ratio of 1-hexene/methyl methacrylate was 33/67.

[Example 6]

The obtained poly(1-hexene)/poly(methyl methacrylate) block copolymer in Example 5 was press-molded to obtain a press sheet of 0.1 cm in thickness. In the obtained press sheet, there were white aggregated portions, suggesting

the presence of remaining poly(1-hexene).

The obtained press sheet was stained with $RuO_4$ and cut into thin pieces by a cryomicrotome, then morphology was observed by TEM (see Figure 2). The black portion indicating residual $RuO_4$ and aggregation of poly(1-hexene) around a poly(1-hexene)/poly(methyl methacrylate) block copolymer were observed.

[Example 7]

To remove poly(1-hexene) from the poly(1-hexene)/poly(methyl methacrylate) block copolymer (15.0 g) obtained in Example 5, Soxhlet extraction was performed by a Soxhlet extractor using hexane as a solvent. Poly(1-hexene) (1.0 g, yield 6.7%) was removed to obtain the poly(1-hexene)/poly(methyl methacrylate) block copolymer (14.4 g, yield 95.9%).

The removed poly(1-hexene) had Mn = 8,700 and Mw/Mn = 1.70 and the composition ratio of 1-hexene/methyl methacrylate was 100/0.

The obtained poly(1-hexene)/poly(methyl methacrylate) block copolymer had Mn = 37,400 and Mw/Mn = 1.31, and the composition ratio of 1-hexene/methyl methacrylate was 23/77.

[Example 8]

To further remove poly(1-hexene) from the poly(1-hexene)/poly(methyl methacrylate) block copolymer (14.2 g) obtained in Example 7, Soxhlet extraction was performed by a Soxhlet extractor using heptane as a solvent. Poly(1-hexene)(0.6 g, yield 4.1%) was removed to obtain poly(1-hexene)/poly(methyl methacrylate) block copolymer (12.9 g, yield 90.4%).

The removed poly(1-hexene) had Mn = 11,800 and Mw/Mn = 1.82 and the composition ratio of 1-hexene/methyl methacrylate was 100/0.

The obtained poly(1-hexene)/poly(methyl methacrylate) block copolymer had Mn = 41,700 and Mw/Mn = 1.23 and the composition ratio of 1-hexene/methyl methacrylate was 17/83.

[Example 9]

The poly(1-hexene)/poly(methyl methacrylate) block copolymer obtained in Example 8 was press-molded at 200°C to obtain a press sheet of 0.05 cm in thickness.

The obtained press sheet was stained by soaking it in a 0.5% aqueous $RuO_4$ solution at 50°C for 6 hours. After ultra-thin (100 nm) cut pieces were prepared at room temperature, morphology was observed by STEM (S5500FE-SEM manufactured by Hitachi Ltd.) under an acceleration voltage as low as 20 kV (see Figure 3). Micro phase-separation structure was observed as micro spheres and the polymer was confirmed as a block copolymer.

[Example 10]

The poly(1-hexene)/poly(methyl methacrylate) block copolymer (625 mg) obtained in Example 8 was dissolved in toluene to prepare a 5 wt% toluene solution. The solution was poured in a Teflon dish of 5 cm in diameter and toluene was vaporized at room temperature. After the dish was dried under vacuum at 80°C and stored at 150°C for 12 hours to obtain the poly(1-hexene)/poly(methyl methacrylate) block copolymer as a transparent sheet.

The sheet obtained was stained by soaking it in a 0.5% aqueous $RuO_4$ solution at 50°C for 6 hours. After ultra-thin (100 nm) cut pieces were prepared at room temperature, morphology was observed by STEM (S5500FE-SEM manufactured by Hitachi Ltd.) under an acceleration voltage as low as 20 kV (see Figure 4). Micro phase-separation structure was observed as micro hexagons and the polymer was confirmed as a block copolymer.

## Industrial Applicability

The olefin/(meth)acrylate block copolymer obtained by the present invention has good affinity for not only a polyolefin having no polar group but also various polar substances including a metal, and useful as, for example, a compatibilizing agent and an adhesive agent.

## Claims

1. An olefin/(meth)acrylate block copolymer in which a polyolefin segment obtained by polymerization of an olefin is covalently-bonded to a poly(meth)acrylate segment obtained by polymerization of a (meth)acrylate compound, and

a morphology has a micro phase-separation structure.

**2.** The olefin/(meth)acrylate block copolymer according to Claim 1, wherein the olefin has 2 to 20 carbon atoms.

**3.** The olefin/(meth)acrylate block copolymer according to Claim 1 or 2, wherein the olefin is 1-hexane.

**4.** The olefin/(meth)acrylate block copolymer according to any one of Claims 1 to 3, wherein the (meth)acrylate compound is methyl methacrylate.

**5.** The olefinl(meth)acrylate block copolymer according to any one of Claims 1 to 4, wherein the olefin/(meth)acrylate block copolymer comprises not more than 27 mol% of an olefin monomer and not less than 73 mol% of a (meth) acrylate compound monomer.

**6.** The olefin/(meth)acrylate block copolymer according to any one of Claims 1 to 5, wherein a molecular weight of the olefin/(meth)acrylate block copolymer satisfies the following formulas:

$$Mn \geq 22{,}000 \text{ and } 1.5 > Mw/Mn > 1.1$$

wherein Mn represents a number average molecular weight in terms of polystyrene, Mw represents a weight average molecular weight in terms of polystyrene and Mw/Mn represents molecular weight distribution.

**7.** A method for producing an olefin/(meth)acrylate block copolymer by polymerizing an olefin and a (meth)acrylate using a polymerization catalyst obtained by bringing a transition metal complex represented by formula (1):

[Chemical Formula 1]

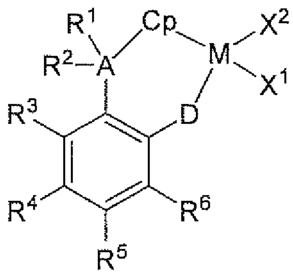

(1)

[in formula (1), M represents a group-IV element of the periodic table, A represents a group-XIV element of the periodic table, D represents a group-XVI element of the periodic table, Cp represents a group having a cyclopentadienyl type anion skeleton, $R^1$, $R^2$, $R^3$, $R^4$, $R^5$ and $R^6$ are the same or different and represent a hydrogen atom, a halogen atom, an alkyl group having 1 to 20 carbon atoms, an aryl group having 6 to 20 carbon atoms, an aralkyl group having 7 to 20 carbon atoms, a silyl group substituted with a hydrocarbon group having 1 to 20 carbon atoms, an alkoxy group having 1 to 20 carbon atoms, an aryloxy group having 6 to 20 carbon atoms, an aralkyloxy group having 7 to 20 carbon atoms or an amino group substituted with a hydrocarbon group having 1 to 20 carbon atoms, the alkyl group, aryl group, aralkyl group, alkoxy group, aryloxy group, aralkyloxy group and hydrocarbon group in $R^1$, $R^2$, $R^3$, $R^4$, $R^5$ and $R^6$ may respectively be substituted with a halogen atom, $R^1$ and $R^2$ may join to form a ring, $R^3$ and $R^4$, $R^4$ and $R^5$, and $R^5$ and $R^6$ each optionally join to form a ring, $X^1$ and $X^2$ represent an alkyl group having 1 to 20 carbon atoms, an aryl group having 6 to 20 carbon atoms and an aralkyl group having 7 to 20 carbon atoms, the alkyl group, aryl group and aralkyl group in $X^1$ and $X^2$ may respectively be each substituted with a halogen atom], into contact with at least one boron compound selected from the group consisting of the compounds represented by formulas (B1), (2) and (B3):

$BQ^1Q^2Q^3$ (B1)

$G^+(BQ^1Q^2Q^3Q^4)^-$ (B2)

$$(L^1\text{-}H)^+(BQ^1Q^2Q^3Q^4)^- \quad (B3)$$

[in formulas (B1), (2) and (B3), B represents a boron atom having a trivalent atomic value, $Q^1$, $Q^2$, $Q^3$ and $Q^4$ each independently represent a halogen atom, a hydrocarbon group, a halogenated hydrocarbon group, a substituted silyl group, an alkoxy group or a disubstituted amino group, $G^+$ represents an inorganic or organic cation and $L^1$ represents a neutral Lewis base].

**8.** The method for producing an olefin/(meth)acrylate block copolymer according to Claim 7, comprising the steps of polymerizing an olefin and then polymerizing a (meth)acrylate compound.

**9.** The method for producing an olefin/(meth)acrylate block copolymer according to Claim 7 or 8, further comprising a step of removing an olefin homopolymer or a (meth)acrylate homopolymer by solvent fractionation.

**10.** An olefin/(meth)acrylate block copolymer produced by the method according to any one of Claims 7 to 9.

*Fig.1*

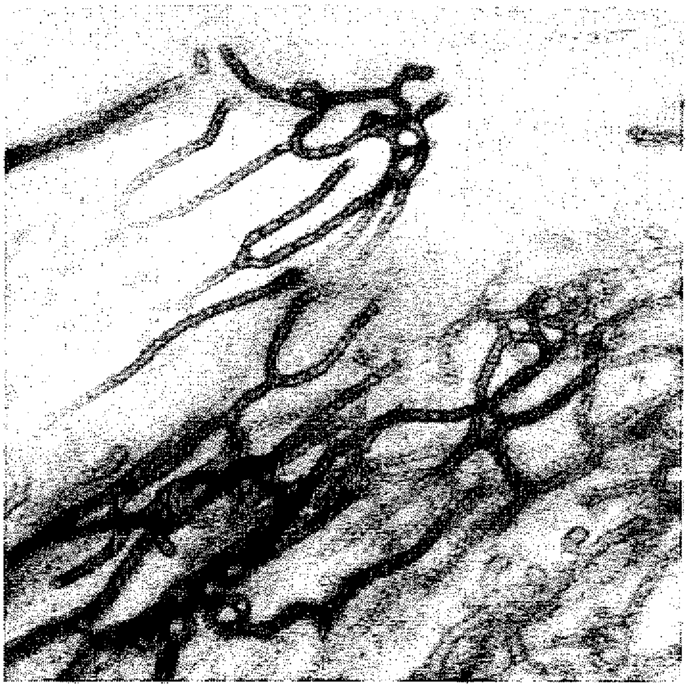

Fig.2

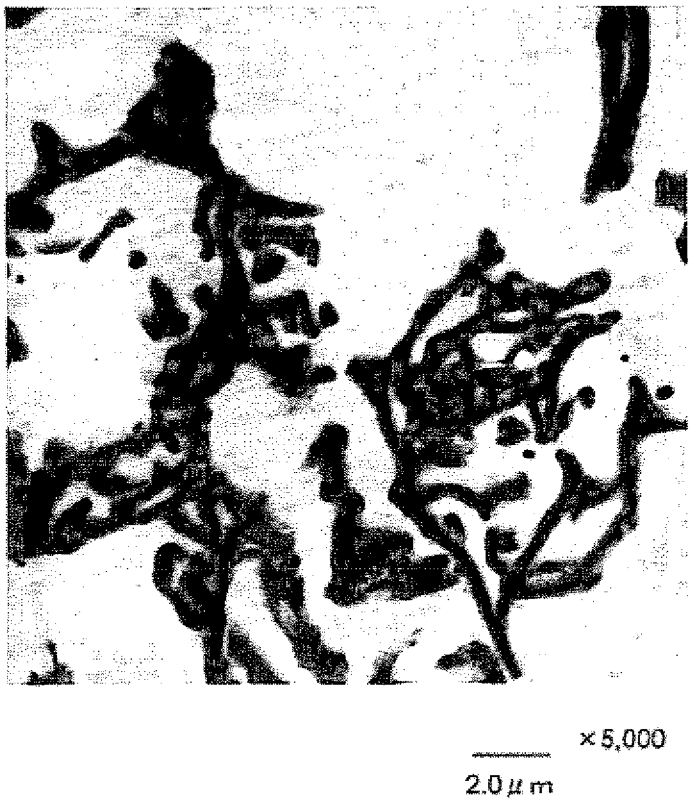

Fig.3

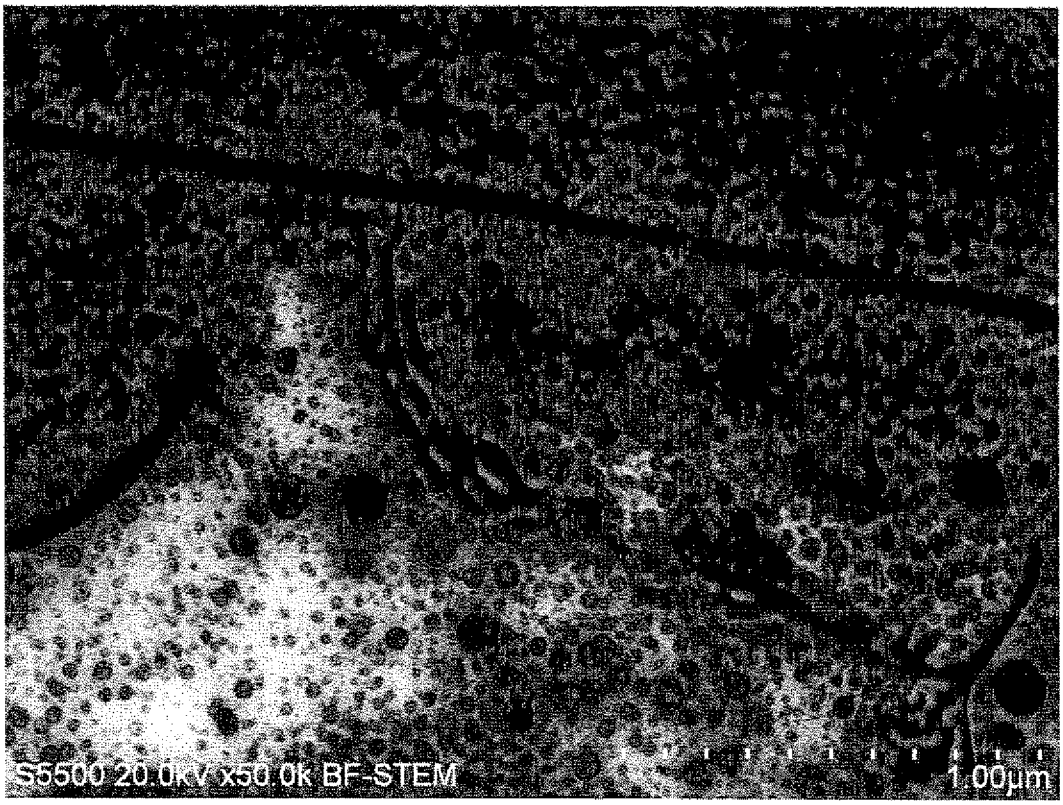

Fig.4

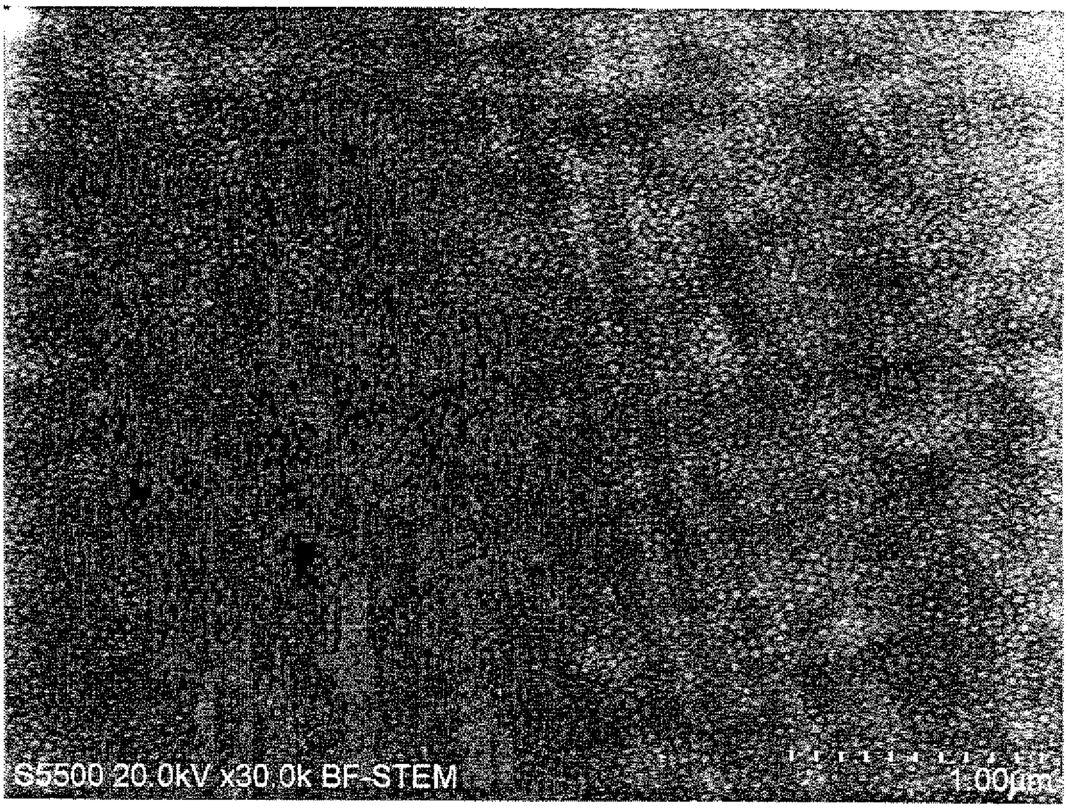

**INTERNATIONAL SEARCH REPORT**

International application No.
PCT/JP2008/066553

A. CLASSIFICATION OF SUBJECT MATTER
*C08F297/08*(2006.01)i, *C08F4/6592*(2006.01)i

According to International Patent Classification (IPC) or to both national classification and IPC

B. FIELDS SEARCHED

Minimum documentation searched (classification system followed by classification symbols)
C08F297/00-08, C08F4/60, C08F8/00, C08F10/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPI, CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | Guillaume Desurmont, Tohru Tokimitsu, Hajime Yasuda, First Controlled Block Copolymerizations of Higher 1-Olefins with Polar Monomers Using Metallocene Type Single Component Lanthanide Initiators, Macromolecules, 2000, 33(21), 7679-7681 | 1-10 |
| A | Hajime Yasuda, Guillaume Desurmont, Block copolymerizations of higher 1-olefins with traditional polar monomers using metallocene-type single component Lanthanide initiators, Polymer International, 2004, 53, 1017-1024 | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 December, 2008 (08.12.08) | 22 December, 2008 (22.12.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/066553

C (Continuation). DOCUMENTS CONSIDERED TO BE RELEVANT

| Category* | Citation of document, with indication, where appropriate, of the relevant passages | Relevant to claim No. |
|---|---|---|
| A | JP 60-252614 A (Toa Nenryo Kogyo Kabushiki Kaisha), 13 December, 1985 (13.12.85), Claims; page 1, lower right column, line 3 to page 2, upper left column, line 11; page 2, lower left column, line 10 to page 3, upper left column, line 16; page 5, upper left column, line 1 to upper right column, line 6; page 6, upper left column, line 13 to upper right column, line 7<br>& US 4704433 A & EP 166536 A<br>& BR 8502559 A & DE 3565990 G<br>& CA 1260644 A & US 4921901 A | 1-10 |
| A | JP 11-80233 A (Sumitomo Chemical Co., Ltd.), 26 March, 1999 (26.03.99), Claims; Par. Nos. [0001], [0006], [0012], [0052] to [0061], [0092]<br>& DE 19830996 A1 & CN 1205340 A<br>& KR 99013710 A & US 6121401 A<br>& SG 76545 A1 | 1-10 |
| A | JP 11-171931 A (Sumitomo Chemical Co., Ltd.), 29 June, 1999 (29.06.99), Claims; Par. Nos. [0015] to [0020], [0063] to [0071]<br>& DE 19805948 A1 & SG 71754 A1<br>& US 6084046 A | 1-10 |
| A | JP 9-87313 A (Sumitomo Chemical Co., Ltd.), 31 March, 1997 (31.03.97), Claims; Par. Nos. [0152] to [0165]<br>& WO 9703992 A1 & EP 842939 A1<br>& CN 1193323 A & KR 99028950 A<br>& CN 1310183 A & US 6329478 B1 | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9087313 A


### Non-patent literature cited in the description


- *Macromolecules,* 2000, vol. 33, 7679
- *Polymer International,* 2004, vol. 53, 1017
- *Macromol. Rapid. Commun.,* 2001, vol. 22, 1147
- *Macromol. Chem. Phys.,* 2002, vol. 203, 2329